# EUROPEAN PATENT APPLICATION

(11) **EP 4 307 536 A1**
(43) Date of publication of application: **17.01.2024**
(21) Application number: 21941623.7
(22) Date of filing: 29.09.2021
(51) Int. Cl.: H02K 5/20, H02K 9/06

(54) **COMPRESSOR, REFRIGERATION SYSTEM AND REFRIGERATION APPARATUS**

(30) Priority: 11.05.2021 CN 202110508906
(71) Applicant: Chongqing Midea General Refrigeration Equipment Co., Ltd., Chongqing 401336 (CN); Midea Group Co., Ltd., Foshan, Guangdong 528311 (CN)
(72) Inventor: WU, Xin, Chongqing 401336 (CN); LI, Zhenshan, Chongqing 401336 (CN); WU, Wenhui, Chongqing 401336 (CN)
(74) Representative: Whitlock, Holly Elizabeth Ann
(86) International application number: PCT/CN2021/121780
(87) International publication number: WO 2022/237057

(57) **Abstract**

A compressor, a refrigeration system and a refrigeration apparatus. A compressor (100) comprises a housing (110), a stator structure (120), a rotor structure (130), a first compression structure (160) and a second compression structure (170). The housing (110) comprises a first section (112), a middle section (114) and a second section (116). The middle section (114) is provided with a first through hole (1142) and a second through hole (1144); a first bearing structure (140) is mounted in the first section (112); a second bearing structure (150) is mounted in the second section (116); the interior of the first compression structure (160) is in communication with the interior of the middle section (114) by means of the first bearing structure (140); and the interior of the second compression structure (170) is in communication with the interior of the middle section (114) by means of the second bearing structure (150). The compressor has a good refrigeration effect and ensures the stability of the compressor.

## Description

The present application claims priority to Chinese Patent Application No. 2 0 2110 5 0 8 9 0 6.4, entitled "COMPRESSOR, REFRIGERATION SYSTEM, AND REFRIGERATION APPARATUS", and filed with China National Intellectual Property Administration on May 11, 2021, the entire disclosure of which is incorporated herein by reference.

### FIELD

The present disclosure relates to the field of compressor technologies, and more particularly, to a compressor, a refrigeration system, and a refrigeration apparatus.

### BACKGROUND

At present, during operation of a centrifugal refrigeration compressor, a motor serves as a main power input component with large heat release. If the motor cannot be effectively cooled, the stator may have an excessive winding temperature or even be burnt out, and a rotor may also be damaged due to overheating. Meanwhile, the rotor is excessively stretched due to the overheating, resulting in damage to other components such as a bearing.

### SUMMARY

The present disclosure aims to at least solve or improve one of the technical problems existing in the related art.

To this end, an embodiment of the present disclosure provides a compressor.

An embodiment of the present disclosure provides a refrigeration system.

An embodiment of the present disclosure provides a refrigeration apparatus.

In view of this, in the embodiment of the present disclosure, the present disclosure provides a compressor including: a housing including a first section, a middle section, and a second section which are from an end of the housing to another end of the housing; a stator structure mounted in the housing and located at the middle section; a rotor structure rotatably passing through the stator structure; a first bearing structure mounted in the first section; a second bearing structure mounted in the second section, the rotor is mounted at the first bearing structure and the second bearing structure; a first compression structure disposed at an end of the first section facing away from the middle section; and a second compression structure disposed at an end of the second section facing away from the middle section. The middle section has a first through hole and a second through hole, and each of the first through hole and the second through hole is in communication with an interior of the housing and an outside of the housing. An interior of the first compression structure is in communication with an interior of the middle section through the first bearing structure. An interior of the second compression structure is in communication with the interior of the middle section through the second bearing structure.

The compressor according to the present disclosure includes the housing, the stator structure, the rotor structure, the first bearing structure, the second bearing structure, the first compression structure, and the second compression structure. The stator structure, the first bearing structure, and the second bearing structure are disposed at the housing. In an embodiment, in an axial direction of the housing, the right housing is divided into three portions from an end of the housing to another end of the housing, i.e., the first section, the middle section, and the second section. The stator structure is located at the middle section. The first bearing structure is located at the first section. The second bearing structure is located at the second section. Then, the rotor is mounted in the first bearing structure and the second bearing structure and cooperates with stator. In addition, two ends of the housing are mounted in the first compression structure and the second compression structure. That is, the first compression structure is mounted in the first section, and the second compression structure is mounted in the second section.

The first compression structure is in communication with the interior of the housing, and then refrigerant gas may leak into the housing when a refrigerant is compressed by the first compression structure. In an embodiment, the refrigerant gas leaks into the first section, and the first bearing structure is disposed at the first section. Therefore, the refrigerant entering the housing from the first compression structure can cool the first bearing structure. Moreover, the first bearing structure may connect the first compression structure to an inner space of the middle section, and therefore a refrigerant entering the first section may enter the middle section through the first bearing structure. Thus, a cooling effect on the first bearing structure is improved.

Similarly, the second compression structure is in communication with the interior of the housing, and then the refrigerant gas may leak into the interior of the housing when the refrigerant is compressed by the second compression structure. In an embodiment, refrigerant gas leaks into the second section, and the second bearing structure is disposed at the second section. Therefore, the refrigerant entering the housing from the second compression structure can cool the second bearing structure. Moreover, the second bearing structure may connect the second compression structure to an inner space of the middle section, and therefore the refrigerant can enter the second section may enter the middle section through the second bearing structure. Thus, a cooling effect on the second bearing structure is improved.

Moreover, the middle section has the first through hole and the second through hole. The first through hole may connect the interior of the housing to the outside of the housing, and the second through hole may also connect the interior of the housing to the outside of the housing. Then, the first through hole may be used as an inlet of the refrigerant, and the second through hole may be used as a discharge outlet of the refrigerant. Therefore, the refrigerant may be introduced from the first through hole to cool the stator structure and the rotor structure.

Further, the refrigerant entering the interior of the middle section from the right first compression structure and the refrigerant entering the interior of the middle section from the second compression structure is also discharged out of the second through hole.

In the compressor according to the present disclosure, the stator structure and the rotor structure are cooled by the refrigerant entering from the first through hole, and the first bearing structure is cooled by the refrigerant entering from the first compression structure, and the second bearing structure is cooled by the refrigerant entering from the second compression structure. Therefore, the three-section cooling method can provide a better cooling effect. Furthermore, each individual cooling part does not require excessive refrigerant flow volume. Thus, an impact of the refrigerant on the stator structure, the rotor structure, the first bearing structure, and the second bearing structure is reduced, and stability of operation of the compressor is ensured. Moreover, there are only two communication structures in the middle section, the first through hole and the second through hole, which are simple in structure and easy to produce.

In addition, the compressor in the above technical solution according to the present disclosure may further have the following additional technical features.

On the basis of the above technical solution, further, the stator structure includes a body having a third through hole and a fourth through hole in communication with the third through hole. The third through hole is formed in an axial direction of the body. The rotor structure passes through the third through hole. The fourth through hole is formed in a radial direction of the body.

In the technical solution, the stator structure includes the body, and the third through hole and the fourth through hole that are formed in the body. The third through hole is formed in the axial direction of the body, and the fourth through hole is formed in the radial direction of the body. The third through hole is in communication with the fourth through hole, and therefore the refrigerant partially enters the third through hole through the fourth through hole when the refrigerant is transmitted into the housing through the first through hole. Thus, the interior of the stator structure and the rotor structure are directly cooled. As a result, the cooling effect on the stator structure and the rotor structure is further improved.

On the basis of any one of the above technical solutions, further, the body has one fourth through hole, or a plurality of fourth through holes uniformly arranged at the body.

In this technical solution, the body has one or more through holes, and the number of the fourth through holes may be determined based on volume of the stator or actual needs to achieve a better cooling effect. Moreover, when the body has a plurality of fourth through holes, the plurality of fourth through holes are uniformly arranged at the body. Therefore, an effect of uniform cooling is achieved. Thus, an excessively high local temperature is avoided.

On the basis of any one of the above technical solutions, further, the fourth through hole is located at a middle of the body in the axial direction of the body.

In this technical solution, the fourth through hole is located at the middle of the body in the axial direction of the body to uniformly cool two sides of the rotor structure in the axial direction. Furthermore, strokes of the refrigerants on the two sides are both within a reasonable range. Therefore, excessive high temperature at a single-side of the rotor structure is avoided. Thus, the refrigeration effect is improved.

On the basis of any one of the above technical solutions, further, the middle section has a guide groove formed at an inner wall of the middle section.

In this technical solution, the guide groove is formed inside the middle section, and therefore the refrigerant may move along a corresponding path. Thus, the better cooling effect is achieved.

On the basis of any one of the above technical solutions, further, the middle section has two second through holes. The guide groove includes a first flow guide structure spirally disposed at the middle section and in communication with the first through hole and a second flow guide structure spirally disposed at the middle section and in communication with the first through hole.

In the technical solution, the guide groove includes the first flow guide structure and the second flow guide structure, and the two flow guide structures are spirally formed at two sides of the first through hole, respectively, and therefore the stator structure is cooled from the middle to the two sides. Moreover, due to the spiral structure, a whole outer side of the stator structure may be in contact with the refrigerant. Further, a time period of the refrigerant in contact with the stator structure is prolonged, and therefore the heat of the stator structure is better taken away to allow for the better cooling effect.

On the basis of any one of the above technical solutions, the compressor further includes: at least one first blocking rib connected to one of the side walls of the guide groove; and at least one second blocking rib connected to another one of the side walls of the guide groove. The at least one first blocking rib and the at least one second blocking rib are alternatively arranged sequentially at the guide groove in a circumferential direction of the housing.

In the technical solution, the first blocking rib and the second blocking rib are disposed at the guide groove. Moreover, one of the first blocking rib and the second blocking rib is connected to the side wall of the guide groove, and the other one of the first blocking rib and the second blocking rib is connected to the other side wall of the guide groove. The at least one first blocking rib and the at least one second blocking rib are alternatively arranged to form a bent flow space. Therefore, a flow path of the refrigerant is prolonged and the time period of the refrigerant in contact with the stator structure is increased. In this way, the heat of the stator structure can be better taken away to allow for the better cooling effect.

On the basis of any one of the above technical solutions, further, the guide groove has an annular structure and surrounds the inner wall of the middle section.

In this technical solution, the guide groove surrounds the inner wall of the middle section, and therefore a peripheral side of the whole stator structure can be cooled by the refrigerant. Thus, the cooling effect is improved.

On the basis of any one of the above technical solutions, further, in an axial direction of the housing, the first through hole is located at a middle of the middle section and in communication with the guide groove; and the middle section has two second through holes respectively formed at two sides of the middle section and in communication with the guide groove.

In this technical solution, the first through hole is located at the middle of the body in the axial direction of the body to uniformly cool the two sides of the stator structure in the axial direction. Furthermore, strokes of the refrigerants on the two sides are both within a reasonable range. Therefore, excessive high temperature at the single-side of the rotor structure is avoided. Thus, the refrigeration effect is improved. The second through holes formed in the two sides of the first through hole can quickly discharge the refrigerant that has cooled the compressor to ensure a circulation effect of the refrigerant and improve the cooling effect on the compressor.

On the basis of any one of the above technical solutions, further, the compressor is a horizontal compressor, and each of two side walls of the guide groove has a communication port located at a higher level than two thirds of an outer diameter of the guide groove. A flow guide port is located at a lower level than one third of the outer diameter of the guide groove.

In this technical solution, the compressor is the horizontal compressor. The flow guide port is located at a lower level than the one third of the outer diameter of the guide groove, and therefore the refrigerant is discharged from a lower portion. The communication port is located at a higher level than the two thirds of the outer diameter of the guide groove, and therefore the refrigerant is discharged from an upper portion. Hence, in the design of entering from the lower end and discharging from the upper end, the refrigerant may flow in the housing 110 for a longer time period in order to overcome gravity. In addition, a possibility of interruption of flowing can also be reduced during the refrigerant flowing in the housing 110. Thus, the cooling effect is improved.

On the basis of any one of the above technical solutions, further, the first compression structure includes a first compression chamber and a first channel, and the first channel is configured to connect the first compression chamber to the housing. The second compression structure includes a second compression chamber and a second channel, and the second channel is configured to connect the second compression chamber to the housing.

In this embodiment, the first compression structure includes the first compression chamber and the first channel. The refrigerant may be compressed in the first compression chamber and leak into the housing through the first channel. Therefore, when the refrigerant is compressed, the refrigerant may leak into the housing from the first channel. Thus, the first bearing structure is cooled.

The second compression structure includes the second compression chamber and the second channel. The refrigerant may be compressed in the second compression chamber and leak into the housing through the second channel. Therefore, when the refrigerant is compressed, the refrigerant may leak into the housing from the second channel. Thus, the second bearing structure is cooled.

On the basis of any one of the above technical solutions, further, the first bearing structure is an electromagnetic bearing structure, and the second bearing structure is the electromagnetic bearing structure.

In this technical solution, each of the first bearing structure and the second bearing structure is the electromagnetic bearing structure. Since the electromagnetic bearing is low in friction force and high in rotation speed, and a gap of the electromagnetic bearing structure can allow a refrigerant to flow through, a cooling effect on the first bearing structure and the second bearing structure is improved.

On the basis of any one of the above technical solutions, further, the compressor further includes a communication pipe configured to connect the first compression structure to the second compression structure.

In this technical solution, the first compression structure is in communication with the second compression structure through the communication pipe, and therefore two-stage compression is achieved. Thus, a compression effect of the compressor is improved.

According to the embodiment of the present disclosure, the present disclosure provides a refrigeration system. The refrigeration system includes the compressor provided in any one of the above technical solutions.

The refrigeration system according to the present disclosure includes the compressor provided in any one of the above technical solutions, and therefore, the refrigeration system according to the present disclosure has all beneficial effects of the compressor provided in any one of the above technical solutions, and details will not be enumerated herein.

On the basis of the above technical solution, the refrigeration system further includes: an evaporator connected to the first compression structure of the compressor and the second through hole of the compressor; and a condenser connected to the first through hole of the compressor and the second compression structure of the compressor.

In this technical solution, the refrigeration system further includes the evaporator and the condenser. The gaseous refrigerant discharged from the evaporator is compressed by the first compression structure and the second compression structure and leaks into the housing to cool the compressor. Lastly, the refrigerant discharged from the second compression structure enters the condenser.

Refrigerant liquid discharged from the condenser enters the housing through the first through hole, and the gaseous refrigerant is formed to enter the evaporator after the compressor is cooled.

Further, in the refrigeration system, the compressor is cooled while heat exchange is performed in the refrigeration system.

According to an embodiment of the present disclosure, the present disclosure provides a refrigeration apparatus. The refrigeration apparatus includes: the compressor provided in any one of the above technical solutions; or the refrigeration system provided in any one of the above technical solutions.

The refrigeration apparatus according to the present disclosure includes the compressor provided in any one of the above technical solutions or the refrigeration system provided in any one of the above technical solutions, and therefore, the refrigeration apparatus has all beneficial effects of the compressor provided in any one of the above technical solutions or the refrigeration system provided in any one of the above technical solutions, and details will not be enumerated herein.

Additional aspects and advantages of the embodiments of present disclosure will be provided at least in part in the following description, or will become apparent in part from the following description, or can be learned from the practice of the embodiments of the present disclosure.

### BRIEF DESCRIPTION OF THE DRAWINGS

These and other aspects and advantages of embodiments of the present disclosure will become apparent and more readily appreciated from the following descriptions made with reference to the accompanying drawings, in which:
FIG. 1 is a schematic structural diagram of a compressor according to an embodiment of the present disclosure.
FIG. 2 is a schematic structural diagram of another compressor according to an embodiment of the present disclosure.
FIG. 3 is a cross-sectional view of a compressor according to an embodiment of the present disclosure.
FIG. 4 is a cross-sectional view of a compressor according to an embodiment of the present disclosure.
FIG. 5 is a cross-sectional view of another compressor according to an embodiment of the present disclosure.
FIG. 6 is a cross-sectional view of yet another compressor according to an embodiment of the present disclosure.

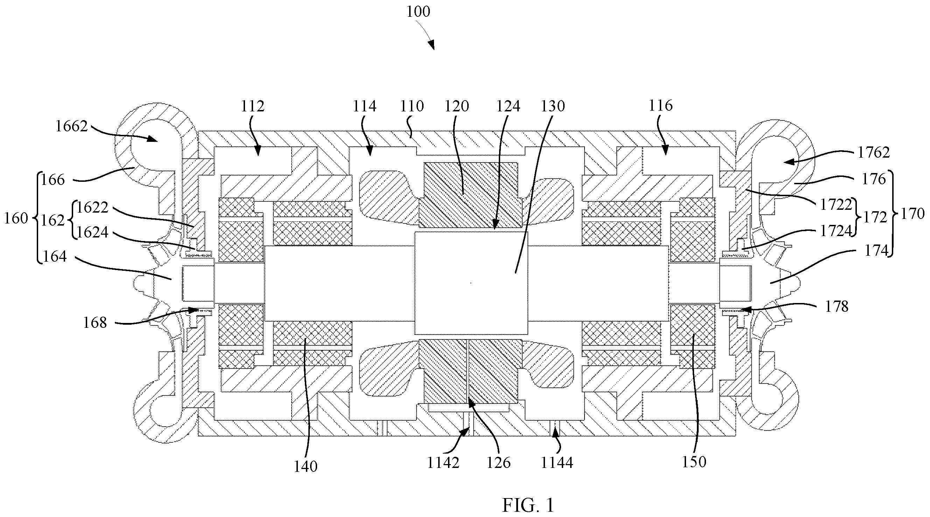

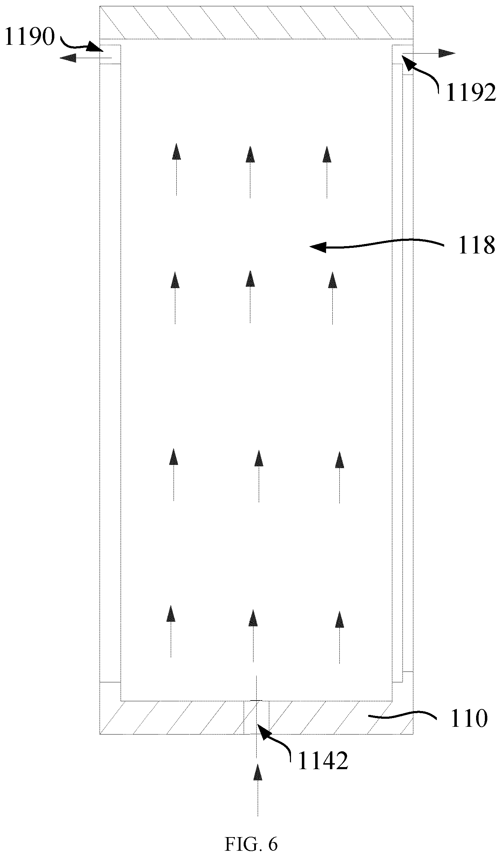

A correspondence between reference numerals and component names in FIG. 1 to FIG. 6 is:

100 compressor, 110 housing, 112 first section, 114 middle section, 1142 first through hole, 1144 second through hole, 116 second section, 118 guide groove, 1182 first flow guide structure, 1184 second flow guide structure, 1186 first blocking rib, 1188 second blocking rib, 1190 first communication port, 1192 second communication port, 120 stator structure, 124 third through hole, 126 fourth through hole, 130 rotor structure, 140 first bearing structure, 150 second bearing structure, 160 first compression structure, 162 first mounting portion, 1622 first mounting plate, 1624 first shaft sleeve, 164 first impeller, 166 first compression body, 1662 first compression chamber, 168 first channel, 170 second compression structure, 172 second mounting portion, 1722 second mounting plate, 1724 second shaft sleeve, 174 second impeller, 176 second compression body, 1762 second compression chamber, 178 second channel, 180 communication pipe.

### DETAILED DESCRIPTION

In order to make the above-mentioned objects, features, and advantages of the present disclosure more obvious and comprehensive, a detailed description of specific embodiments of the present disclosure will be given below in conjunction with the accompanying drawings. It should be noted that the embodiments of the present disclosure and the features in the embodiments can be combined with each other without conflict.

In the following description, many specific details are provided to facilitate full understanding of the present disclosure. However, the present disclosure can also be implemented in other ways different from those described herein. Therefore, the present disclosure is not limited by specific embodiments disclosed below.

A compressor 100, a refrigeration system, and a refrigeration apparatus according to some embodiments of the present disclosure are described below with reference to FIG. 1 to FIG. 6.

### Embodiment 1:

As illustrated in FIG. 1, FIG. 2 and FIG. 3, the present disclosure provides a compressor 100. The processor 100 includes a housing 110, a stator structure 120, a rotor structure 130, a first bearing structure 140, a second bearing structure 150, a first compression structure 160, and a second compression structure 170.

The rotor structure 130 is compatible with the stator structure 120. When the stator structure 120 is energized, a magnetic field is generated to drive the rotor structure 130 to rotate. Moreover, the stator structure 120 is mounted inside, and the rotor structure 130 is mounted inside the housing 110 through the first bearing structure 140 and the second bearing structure 150. The first compression structure 160 is disposed at an end of the housing 110, and the second compression structure 170 is disposed at another end of the housing 110.

In an embodiment, along an axial direction of the housing 110, the housing 110 includes a first section 112, a middle section 114, and a second section 116. The middle section 114 is located between the first section 112 and the second section 116. A stator is mounted in the middle section 114. The first bearing structure 140 is mounted in the first section 112. The first compression structure 160 is connected to the first section 112. The second bearing structure 150 is mounted in the second section 116. The second compression structure 170 is connected to the second section 116.

Further, the middle section 114 has a first through hole 1142 and a second through hole 1144. Since the first through hole 1142 may connect an interior of the housing 100 to an outside of the housing 100, and the second through hole 1144 may connect the interior of the housing 110 to the outside of the housing 110, a refrigerant may be inputted into the housing 110 through the first through hole 1142 and then discharged from the second through hole 1144. In this way, circulation of the refrigerant is realized, bringing about continuous cooling of the stator structure 120 and the rotor structure 130.

Further, the first compression structure 160 is in communication with the first section 112. Therefore, when an operation of refrigerant compression is performed by the first compression structure 160, the refrigerant may partially leak into the first section 112 to cool the first bearing structure 140. Moreover, a first flow channel is formed on the first bearing structure 140 in an axial direction of the first bearing structure 140. Therefore, a refrigerant entering the first section 112 may pass through the first flow channel to cool the first bearing structure 140. At last, the refrigerant entering the first section 112 is discharged into the middle section 114 from the first flow channel and then discharged out of the second through hole 1144.

The second compression structure 170 is in communication with the second section 116. Therefore, when an operation of refrigerant compression is performed by the second compression structure 170, the refrigerant may partially leak into the second section 116 to cool the second bearing structure 150. Moreover, a second flow channel is formed on the second bearing structure 150 in an axial direction of the second bearing structure 150. Therefore, a refrigerant entering the second section 116 may pass through the second flow channel to cool the second bearing structure 150. At last, the refrigerant entering the second section 116 is discharged into the middle section 114 from the second flow channel and then discharged out of the second through hole 1144.

The compressor 100 according to the present disclosure includes the housing 110, the stator structure 120, the rotor structure 130, the first bearing structure 140, the second bearing structure 150, the first compression structure 160, and the second compression structure 170. The stator structure 120, the first bearing structure 140, and the second bearing structure 150 are disposed at the housing 100. In an embodiment, in the axial direction of the housing 110, the right housing 100 is divided, from the end of the housing to the other end of the housing, into three sections, which are the first section 112, the middle section 114, and the second section 116. The middle section 114 is located between the first section 112 and the second section 116. The stator 120 is located at the middle section 114. The first bearing structure 140 is located at the first section 112. The second bearing structure 150 is located at the second section 116. Then, the rotor structure 130 is mounted at the first bearing structure 140 and the second bearing structure 150, and compatible with the stator 120. Moreover, two ends of the housing 100 are mounted in the first compression structure 160 and the second compression structure 170, respectively. That is, the first compression structure 160 is mounted in the first section 112, and the second compression structure 170 is mounted in the second section 116.

The first compression structure 160 is in communication with the interior of the housing 100. Therefore, when the refrigerant is compressed by the first compression structure 160, gas may leak towards the interior of the housing 100, and specifically an interior of the first section 112. Since the first bearing structure 140 is disposed at the first section 112, the first bearing structure 140 can be cooled by the refrigerant entering the housing 110 from the first compression structure 160. Moreover, since the first bearing structure 140 may connect the first compression structure 160 to an inner space of the middle section 114, the refrigerant entering the first segment 112 may enter the middle section 114 through the first bearing structure 140. As a result, the cooling effect on the first bearing structure 140 is improved.

Similarly, the second compression structure 170 is in communication with the interior of the housing 110. Therefore, when the refrigerant is compressed by the second compression structure 170, the gas may leak towards the interior of the housing 100, and specifically an interior of the second section 114. Since the second bearing structure 150 is disposed at the second section 114, the second bearing structure 150 can be cooled by the refrigerant entering the housing 110 from the second compression structure 170. Moreover, since the second bearing structure 150 may connect the second compression structure 170 to an inner space of the middle section 114, the refrigerant entering the second segment 116 may enter the middle section 114 through the second bearing structure 150. As a result, a cooling effect on the second bearing structure 150 is improved.

Moreover, since the middle section 114 has the first through hole 1142 and the second through hole 1144, the first through hole 1142 may connect the interior of the housing 100 to the outside of the housing 100, and the second through hole 1144 may also connect the interior of the housing 100 to the outside of the housing 100. Then, the first through hole 1142 may be used as an inlet port of the refrigerant, and the second through hole 1144 may be used as a discharge port of the refrigerant. Thus, the refrigerant may be introduced through the first through hole 1142 to cool the stator structure 120 and the rotor structure 130.

Further, the refrigerant entering the middle section 114 from the right first compression structure 160 and the second compression structure 170 is also discharged by the second through hole 1144.

As mentioned above, in the compressor 100 according to the present disclosure, the stator structure 120 and the rotor structure 130 are cooled by the refrigerant entering the first through hole 1142, the first bearing structure 140 is cooled by the refrigerant entering the first compression structure 160, and the second bearing structure 150 is cooled by the refrigerant entering the second compression structure 170. Therefore, the three-section separate cooling method can provide a better refrigeration effect. Further, since each separate refrigeration part has no need for excessive refrigerant flow volume, impact of the refrigerant on the stator structure 120, the rotor structure 130, the first bearing structure 140, and the second bearing structure 150 is reduced, which ensures stability of the operation of the compressor 100. Moreover, in the middle section 114 are only two communication structures, the first through hole 1142 and the second through hole 1144, which are simple and easy to produce.

In an embodiment, the stator structure 120 includes a stator iron core and a winding. After the winding is energized, a magnetic field is generated to drive the rotor structure 130 to rotate. The rotor structure 130 includes a rotor iron core and a magnetic member. The magnetic member is driven by the magnetic field generated by the winding to drive the rotor structure 130 to rotate.

### Embodiment 2:

As illustrated in FIG. 1, FIG. 2 and FIG. 3, on the basis of Embodiment 1, further, the stator structure 120 includes a body and a third through hole 124 formed on the body.

In this embodiment, the third through hole 124 penetrates the body in an axial direction of the body to allow the rotor structure 130 to be fitted and engaged with the stator structure 120, i.e., the rotor structure 130 rotatably passes through the third through hole 124. In addition, an air gap is formed between the stator structure 120 and the rotor structure 130.

Further, a fourth through hole 126 is further formed on the body in a radial direction of the body and in communication with the third through hole 124. An opening is formed at a peripheral side of the body.

In this embodiment, when the refrigerant is transmitted into the housing 110 through the first through hole 1142, the refrigerant may flow in the housing 110. Since the fourth through hole 126 is formed on the body of the stator structure 120, the refrigerant entering the housing 100 from the first through hole 1142 is first in contact with the peripheral side of the stator structure 120. The refrigerant may flow into the third through hole 124 through the fourth through hole 126 and reach the air gap between the stator structure 120 and the rotor structure 130, for the fourth through hole 126 has an opening on an outer peripheral side. Then, the refrigerant may be in contact with an interior of the stator structure 120, an inner peripheral side of stator structure 120, an outer peripheral side of a rotor, and therefore the refrigerant can carry away a temperature of the inner peripheral side of the stator structure 120 and a temperature of the rotor structure 130. In this way, the better cooling effect on the stator structure 120 and the rotor structure 130 is achieved.

When the refrigerant passes through the fourth through hole 126, heat on the stator structure 120 may be carried away from an interior of the fourth through hole 126. Thus, a temperature of the stator structure 120 is reduced.

### Embodiment 3:

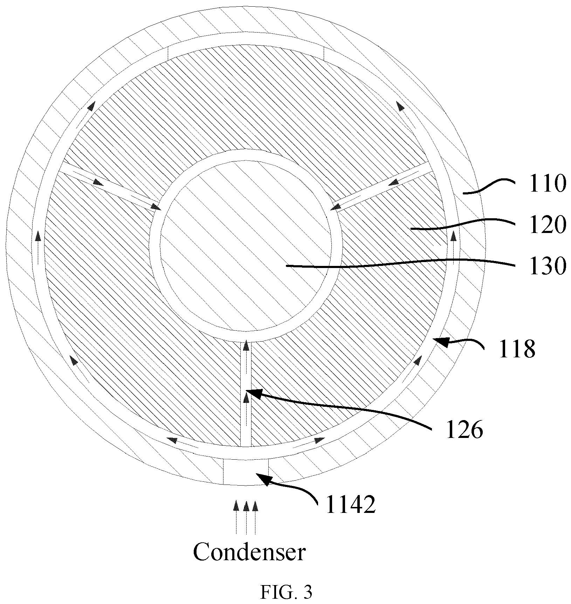

As illustrated in FIG. 3, on the basis of Embodiment 2, further, one fourth through hole 126 may be provided at the stator structure 120.

In this embodiment, one fourth through hole 126 is formed on the stator structure 120.

The body may have a plurality of fourth through holes 126 provided at the stator structure 120 and uniformly arranged at the body of the stator structure 120.

In this embodiment, two fourth through holes 126 are formed on the stator structure 120 and opposite to each other, and an angle formed between the two fourth through holes 126 is approximately 180 degrees. Alternatively, three fourth through holes 126 are formed on the stator structure 120, and an angle between two adjacent fourth through holes 126 of the three fourth through holes 126 is approximately 120 degrees. Alternatively, four fourth through holes 126 are formed on the stator structure 120, and an angle between two adjacent fourth through holes 126 of the four fourth through holes 126 is approximately 90 degrees. Five, six, seven, eight, etc., fourth through holes 126 may also be provided at the stator structure 120 as desired.

Then, the refrigerant may be simultaneously introduced into the air gap at different positions by using the plurality of fourth through holes 126. Likewise, for the rotor structure 130, a plurality of positions may also be simultaneously cooled. Thus, the cooling effect on the stator structure 120 and the rotor structure 130 is improved.

In this embodiment, one or more through holes may be provided based on volume of the stator or actual needs to achieve the better cooling effect. Moreover, when the body has a plurality of fourth through holes 126, the plurality of fourth through holes 126 are uniformly arranged on the body, thereby achieving a uniform cooling effect and avoiding an excessively high local temperature.

### Embodiment 4:

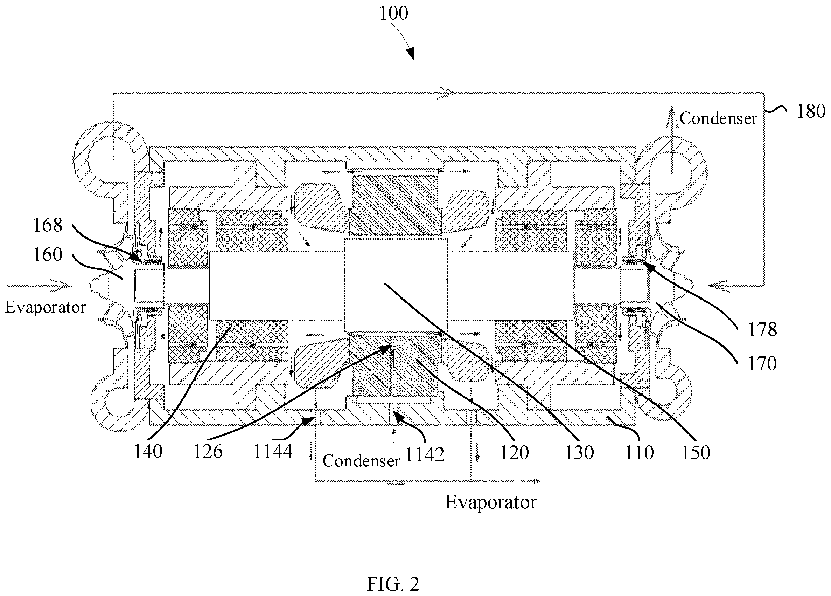

As illustrated in FIG. 1 and FIG. 2, on the basis of Embodiment 2 or Embodiment 3, further, the fourth through hole 126 is formed at a middle of the body of the stator structure 120 by using an axial direction of the stator structure 120 as a benchmark. That is, the fourth through hole 126 is located at a position about half of an axial height of the body of the stator structure 120.

In this embodiment, in the axial height of the body, the fourth through hole 126 is located at about half of the height of the body, and then a distance between the fourth through hole 126 and an end of the body is similar to or the same as a distance between the fourth through hole 126 and another end of the body. Therefore, the stator structure 120 and the rotor structure 130 on two sides of the fourth through hole 126 can have the same cooling effect to more uniformly cool the entire stator structure 120 and the rotor structure 130. Thus, the high local temperature is avoided. In addition, a path from the fourth through to each of the two sides of the stator structure 120 and the rotor structure 130 is within a moderate range. As a result, an end portion of the stator structure 120 and the rotor structure 130 can be better cooled to improve the cooling effect.

### Embodiment 5:

As illustrated in FIG. 3, FIG. 4, FIG. 5, and FIG. 6, on the basis of any one of Embodiments 1 to 4, further, a guide groove 118 is formed on an inner wall of the housing 110 and located at the middle section 114. In addition, each of the first through hole 1142 and the second through hole 1144 is in communication with the guide groove 118. In this embodiment, the stator structure 120 is connected to the housing 110 to form the guide groove 118. A communication port is formed on a side wall of the guide groove 118 and in communication with other spaces in the housing 110.

In this embodiment, the middle section 114 has the guide groove 118 formed at an inner wall of the middle section 114 and the stator structure 120, and then the refrigerant entering the housing 110 from the first through hole 1142 moves along a flow path provided by the guide groove 118. Therefore, a movement of the refrigerant is constrained. Thus, the guide groove 118 can be reasonably designed to achieve the better cooling effect.

### Embodiment 6:

As illustrated in FIG. 1, FIG. 2 and FIG. 4, on the basis of Embodiment 5, further, the housing 110 has two second through holes 1144. The guide groove 118 includes a first flow guide structure 1182 and a second flow guide structure 1184. In the axial direction of the housing 100, a first communication port 1190 is formed at a side of the first flow guide structure 1182 facing away from the first through hole 1142, and a second communication port 1192 is formed at a side of the second flow guide structure 1184 facing away from the first through hole 1142. The first flow guide structure 1182 is spirally disposed at the inner wall of the middle section 114, and the second flow guide structure 1184 is spirally disposed at the inner wall of the middle section 114. The first flow guide structure 1182 and the second flow guide structure 1184 converge at the first through hole 1142, i.e., the first flow guide structure 1182 and the second flow guide structure 1184 are located at the two sides of the first through hole 1142, respectively. In addition, the first communication port 1190 is further formed on the first flow guide structure 1182 and in communication with a second through hole 1144, and a second communication port 1192 is further formed on the second flow guide structure 1184 and in communication with another second through hole 1144. In this embodiment, the first through hole 1142 is located at the middle of the middle section 114, and the first flow guide structure 1182 and the second flow guide structure 1184 are located at the two sides of the first through hole 1142.

In this embodiment, the guide groove 118 includes the first flow guide structure 1182 and the second flow guide structure 1184. The two flow guide structures are spirally formed at the two sides of the first through hole 1142, respectively. Therefore, the stator structure 120 is cooled from the middle to the two sides. Moreover, due to the spiral structure, the outer side of the whole stator structure 120 may be in contact with the refrigerant. In addition, after a contact time period between the refrigerant and the stator structure 120 is prolonged, a heat of the stator structure 120 is better carried away. Therefore, the better cooling effect is achieved. At last, the refrigerant in the first flow guide structure 1182 and the refrigerant in the second flow guide structure 1184 may flow out of the interior of the housing 110, first through different communication port, and then through different second through holes 1144.

In this embodiment, in such flow guide structure, a path length of the refrigerant can be shortened, which avoids a low heat dissipation effect of a tail end due to heat absorbed during flowing of the refrigerant in a rear half of the path length. Therefore, the whole heat dissipation effect is more uniform.

Further, the first flow guide structure 1182 may be in a single-strand spiral shape or a multi-strand spiral shape. The second flow guide structure 1184 may be in a single-strand spiral shape or a multi-strand spiral shape.

### Embodiment 7:

As illustrated in FIG. 1, FIG. 2 and FIG. 5, on the basis of Embodiment 5, further, at least one first blocking rib 1186 and at least one second blocking rib 1188 are disposed at the guide groove 118, and at least one first blocking rib 1186 and at least one second blocking rib 1188 are alternatively arranged. In addition, in the axial direction of the housing 110, the first through hole 1142 is located at the middle of the guide groove 118. In this embodiment, two second through holes 1144 are formed on the housing 110. In the axial direction of the housing 110, a first communication port 1190 is formed at a side of the guide groove 118 facing away from the first through hole 1142, and a second communication port 1192 is formed at the side of the guide groove 118 facing away from the first through hole 1142. In this embodiment, a plurality of first blocking ribs 1186 and a plurality of second blocking ribs 1188 may be between the first through hole 1142 and the communication port for separation.

In this embodiment, the guide groove 118 surrounds the whole middle section 114 and is formed with a bottom wall, a first side wall, and a second side wall. One or a plurality of first blocking ribs 1186 may be provided, together with one or a plurality of second blocking ribs 1188. The plurality of first blocking ribs 1186 and the plurality of second blocking ribs 1188 are taken as an example for description.

A plurality of first blocking ribs 1186 is disposed at the first side wall and spaced apart from the second side wall. A plurality of second blocking ribs 1188 is disposed at the second side wall and spaced apart from the first side wall. In addition, one second blocking rib 1188 is disposed between adjacent first blocking ribs 1186, and one first blocking rib 1186 is disposed between adjacent second blocking ribs 1188. Thus, a bent flow channel structure is formed.

In this embodiment, the guide groove 118 has the first blocking rib 1186 and the second blocking rib 1188. One of the first blocking rib 1186 and the second blocking rib 1188 is connected to the end of the guide groove 118, and the other one of the first blocking rib 1186 and the second blocking rib 1188 is connected to the other end of the guide groove 118, and the first blocking rib 1186 and the second blocking rib 1188 are alternatively arranged to form a flowing space of a bent shape. Therefore, the flowing path of the refrigerant is prolonged, and the contact time period between the refrigerant and the stator structure 120 is increased. Thus, the heat of the stator structure 120 is better carried away. As a result, the better cooling effect is achieved. At last, the refrigerant in the different guide grooves 118 may flow out of the interior of the housing 110, first through the different communication port, and then through the different second through holes 1144.

In an embodiment, in the axial direction of the housing 110, a length of each of the first blocking rib 1186 and the second blocking rib 1188 can be taken as less than or equal to one tenth of the width of the guide groove 118, and greater than or equal to one half of the width of the guide groove 118.

### Embodiment 8:

As illustrated in FIG. 1, FIG. 2 and FIG. 6, on the basis of Embodiment 5, further, the guide groove 118 has an annular structure and is formed on the inner wall of the middle section 114. In addition, in the axial direction of the housing 110, the first through hole 1142 is located at the middle of the guide groove 118. In this embodiment, two second through holes 1144 are formed on the housing 100. In the axial direction of the housing 110, a first communication port 1190 is formed at a side of the guide groove 118 facing away from the first through hole 1142, and a second communication port 1192 is formed at the side of the guide groove 118 facing away from the first through hole 1142.

In this embodiment, the guide groove 118 surrounds the inner wall of the middle section 114. Therefore, a peripheral side of the whole stator structure 120 can be cooled by the refrigerant. Thus, the cooling effect is improved.

### Embodiment 9:

As illustrated in FIG. 1 and FIG. 2, on the basis of any one of Embodiments 1 to 8, further, one first through hole 1142 is provided at the middle of the middle section 114. That is, by using the axial direction of the housing 110 as a benchmark, the first through hole 1142 is located at a position approximately half of the height of the middle section 114 and in communication with the guide groove 118. Two second through holes 1144 are provided at two sides of the first through hole 1142, respectively. Therefore, bidirectional discharge of the refrigerant is achieved.

In this embodiment, in the axial direction of the body, the first through hole 1142 is located at the middle of the middle section 114. Therefore, two sides of the stator structure 120 can be uniformly cooled in the axial direction. Moreover, a path length of the refrigerant on each of the two sides is within a reasonable range. Thus, an excessively high temperature of a single side of the rotor structure 130 is avoided. As a result, a refrigeration effect is improved. Due to the second through hole 1144 formed at the two sides of the first through hole 1142, the refrigerant cooled by the compressor 100 can be quickly discharged to ensure a circulation effect of the refrigerant and improve the cooling effect on the compressor 100.

### Embodiment 10:

As illustrated in FIG. 1, FIG. 2, FIG. 4, FIG. 5, and FIG. 6, on the basis of any one of Embodiments 1 to 9, further, a first communication port 1190 is formed on the first side wall of the guide groove 118, and a second communication port 1192 is formed on the second side wall of the guide groove 118. In a radial direction of the housing 110, a distance between a flow guide port connecting the first through hole 1142 to the guide groove 118 and the first communication port 1190 is greater than and equal to one third of an outer diameter of the guide groove 118 and smaller than and equal to the outer diameter of the guide groove 118.

In the radial direction of the housing 110, a distance between the flow guide port connecting the first through hole 1142 to the guide groove 118 and the second communication port 1192 is greater than and equal to the one third of the outer diameter of the guide groove 118 and smaller than and equal to the outer diameter of the guide groove 118.

In this embodiment, in the radial direction of the housing 110, the distance between the flow guide port connecting the first through hole 1142 to the guide groove 118 and the first communication port 1190 is greater than and equal to the one third of the outer diameter of the guide groove 118 and smaller than and equal to the outer diameter of the guide groove 118. Therefore, it is ensured that the refrigerant entering the housing 110 from the flow guide port is discharged out of the first communication port 1190 after flowing for a long enough distance. Thus, the cooling effect is improved.

In the radial direction of the housing 110, the distance between the flow guide port connecting the first through hole 1142 to the guide groove 118 and the second communication port 1192 is greater than and equal to the one third of the outer diameter of the guide groove 118 and smaller than and equal to the outer diameter of the guide groove 118. Therefore, it is ensured that the refrigerant entering from the flow guide port to the housing 110 is discharged out of the second communication port 1192 after flowing for the long enough distance. Thus, the cooling effect is improved.

Moreover, the first communication port 1190 faces towards the first section 112, and the second communication port 1192 faces towards the second section 116. The refrigerant discharged out of the guide groove 118 through the first communication port 1190 may participate in the cooling of the end portion of the stator structure 120 and an end portion of the first bearing structure 140. The refrigerant discharged out of the guide groove 118 through the second communication port 1192 may participate in the cooling of the end portion of the stator structure 120 and an end portion of the second bearing structure 150.

### Embodiment 11:

As illustrated in FIG. 1 and FIG. 2, on the basis of Embodiment 10, further, the compressor 100 is a horizontal compressor 100. The flow guide port is located at a lower level than the one third of the outer diameter of the guide groove 118. The first communication port 1190 is located at a higher level than two thirds of the outer diameter of the guide groove 118, and the second communication port 1192 is located at a higher level than the two thirds of the outer diameter of the guide groove 118.

In this embodiment, the compressor 100 is the horizontal compressor 100. Since the flow guide port is located at a lower level than the one third of the outer diameter of the guide groove 118, the refrigerant enters from a lower portion. Since the first communication port 1190 is located at a higher level than the two thirds of the outer diameter of the guide groove 118, the refrigerant is discharged from an upper portion. Hence, in the design of entering from the lower end and discharging from the upper end, the refrigerant may flow in the housing 110 for a longer time period in order to overcome gravity. In addition, a possibility of interruption of flowing can also be reduced during the refrigerant flowing in the housing 110. Thus, the cooling effect is improved.

The compressor 100 is the horizontal compressor 100. Since the flow guide port is located at a lower level than the one third of the outer diameter of the guide groove 118, the refrigerant enters from the lower portion. Since the second communication port 1190 is located at a higher level than the two thirds of the outer diameter of the guide groove 118, the refrigerant is discharged from the upper portion. Hence, in the design of entering from the lower end and discharging from the upper end, the refrigerant may flow in the housing 110 for the longer time period in order to overcome the gravity. In addition, the possibility of interruption of flowing can also be reduced during the refrigerant flowing in the housing 110. Thus, the cooling effect is improved.

### Embodiment 12:

As illustrated in FIG. 1 and FIG. 2, on the basis of any one of Embodiments 1 to 11, further, the first compression structure 160 includes: a first mounting portion 162 disposed at the end of the housing 110, a first impeller 164 rotatable relative to the first mounting portion 162, and a first compression body 166 mounted at the first mounting portion 162 and/or the housing 110. The first impeller 164 and an end of the rotor structure 130 pass through the first mounting portion 162 and connected to each other, and a first channel 168 is formed between the first impeller 164 and/or the rotor structure 130 and the first mounting portion 162. A first compression chamber 1662 is formed in the first compression body 166. The second compression structure 170 includes: a second mounting portion disposed at another end of the housing 100, a second impeller 174 rotatable relative to the second mounting portion 172, and a second compression body 176 mounted at the second mounting portion 172 and/or the housing 110. The second impeller 174 and another end of the rotor structure 130 pass through the second mounting portion 172 and connected to each other, and a second channel 178 is formed between the second impeller 174 and/or the rotor structure 130 and the second mounting portion 172. A second compression chamber 1762 is formed in the second compression body 176.

In this embodiment, the first compression structure 160 includes the first mounting portion 162, the first impeller 164, and the first compression body 166. The first mounting portion 162 is connected to the housing 110, and the first compression body 166 has the first compression chamber 1662. In this way, the first impeller 164 can compress the refrigerant in the first compression chamber 1662. Moreover, the first channel 168 is formed between the first mounting portion 162 and the first impeller 164 and/or the rotor structure 130. Therefore, when the refrigerant is compressed, the refrigerant may leak into the first section 112 through the first channel 168. Thus, the first bearing structure 140 is cooled.

The second compression structure 170 includes the second mounting portion 172, the second impeller 174, and the second compression body 176. The second mounting portion 172 is connected to the housing 110, and the second compression body 176 has the second compression chamber 1762. In this way, the second impeller 174 can compress the refrigerant in the second compression chamber 1762. Moreover, the second channel 178 is formed between the second mounting portion 172 and the second impeller 174 and/or the rotor structure 130. Therefore, when the refrigerant is compressed, the refrigerant may leak into the second section 116 through the second channel 178. Thus, the second bearing structure 150 is cooled.

### Embodiment 13:

As illustrated in FIG. 1 and FIG. 2, on the basis of Embodiment 12, further, the first mounting portion 162 includes a first mounting plate 1622 connected to the housing 110; a first shaft sleeve 1624 mounted at the first mounting plate 1622, and the first channel 168 is formed between the first impeller 164 and/or the rotor structure 130 and the first shaft sleeve 1624. The second mounting portion 172 includes: a second mounting plate 1722 connected to the housing 110; and a second shaft sleeve 1724 mounted at the second mounting plate 1722, and the second channel 178 is formed between the second impeller 174 and/or the rotor structure 130 and the second shaft sleeve 1724.

In this embodiment, the first mounting portion 162 includes the first mounting plate 1622 and the first shaft sleeve 1624. The first channel 168 is formed between the first impeller 164 and/or the rotor structure 130 and the first shaft sleeve 1624. Therefore, when the refrigerant is compressed, the refrigerant may leak into the first section 112 through the first channel 168. Thus, the first bearing structure 140 is cooled. In addition, the first shaft sleeve 1624 can increase a service life of the first mounting portion 162 and reduce abrasion of the first impeller 164 during rotation.

The second mounting portion 172 includes the second mounting plate 1722 and the second shaft sleeve 1724. The second channel 178 is formed between the second impeller 174 and/or the rotor structure 130 and the second shaft sleeve 1724. Therefore, when the refrigerant is compressed, the refrigerant may leak into the second section 116 through the second channel 178. Thus, the second bearing structure 150 is cooled. In addition, the second shaft sleeve 1724 can increase a service life of the second mounting portion 172 and reduce abrasion of the second impeller 174 during rotation.

In this embodiment, the first shaft sleeve 1624 is a first sealing sleeve, and the second shaft sleeve 1724 is a second sealing sleeve.

### Embodiment 14:

As illustrated in FIG. 1 and FIG. 2, on the basis of any one of Embodiments 1 to 13, further, each of the first bearing structure 140 and the second bearing structure 150 is an electromagnetic bearing structure.

In this embodiment, the first bearing structure 140 and the second bearing structure 150 are the electromagnetic bearing structure. In the electromagnetic bearing structure, an inner ring is in a suspension state by means of a magnetic force, which thus reduces the friction force and increases a rotation speed. Furthermore, a gap of the electromagnetic bearing structure can allow the refrigerant to flow through. In this way, the cooling effect on the first bearing structure 140 and the second bearing structure 150 is improved.

### Embodiment 15:

As illustrated in FIG. 2, on the basis of any one of Embodiments 1 to 14, further, a communication pipe 180 is connected between the first compression structure 170 and the second compression structure 170. In this embodiment, the first compression chamber 1662 is in communication with the communication pipe 180. The refrigerant compressed by the impeller 164 enters the first compression chamber 1662, and then flows into the second impeller 174 of the second compression structure 170 to be further compressed in the second compression chamber 1762 by means of pressurization of the second impeller 174. Therefore, two-stage compression is formed. In this embodiment, the refrigerant in the second compression structure 170 may be discharged into a condenser.

In this embodiment, the first compression structure 160 is brought into communication with the second compression structure 170 through the communication pipe 180. Thus, the two-stage compression is achieved. As a result, the compression effect of the compressor 100 is improved.

In this embodiment, arrow directions in FIG. 2, FIG. 3, FIG. 4, FIG. 5, and FIG. 6 represent flowing directions of the refrigerant.

As illustrated in FIG. 2, gas is discharged into the first compression structure 160 from an evaporator. The refrigerant is compressed by the first compression structure 160. A part of the refrigerant enters the housing 110 to cool the first bearing structure 140, which, after passing through the first bearing structure 140, enters the middle section 114 and can be discharged from the second through hole 1144. Another part of the refrigerant in the first compression structure 160 is discharged into the second compression structure 170 through the connection pipe. A part of the refrigerant enters the housing 110 to cool the second bearing structure 150, which, after passing through the first bearing structure 140, enters the middle section 114 and can be discharged from the second through hole 1144. Another part of the refrigerant in the second compression structure 170 is discharged into the condenser. In this embodiment, the refrigerant entering the housing 110 from the first compression structure 160 and the second compression structure 170 is a gaseous refrigerant.

The refrigerant in the condenser enters the housing 110 through the first through hole 1142, and can cool the stator structure 120 through the guide groove 118. At the same time, a part of the refrigerant can cool an inner side of the stator structure 120 and an outer side of the rotor structure 130 by entering the air gap from the fourth through hole 126. Another part of the refrigerant located at the guide groove 118 is discharged from the guide groove 118 through the first communication port 1190 and the second communication port 1192, and can cool the first bearing structure 140 and the second bearing structure 150. In addition, the refrigerant in the housing 110 is finally discharged into the evaporator through the second through hole 1144.

As illustrated in FIG. 3, a part of the refrigerant entering the guide groove 118 flows around the guide groove 118, and another part enters the air gap through the fourth through hole 126.

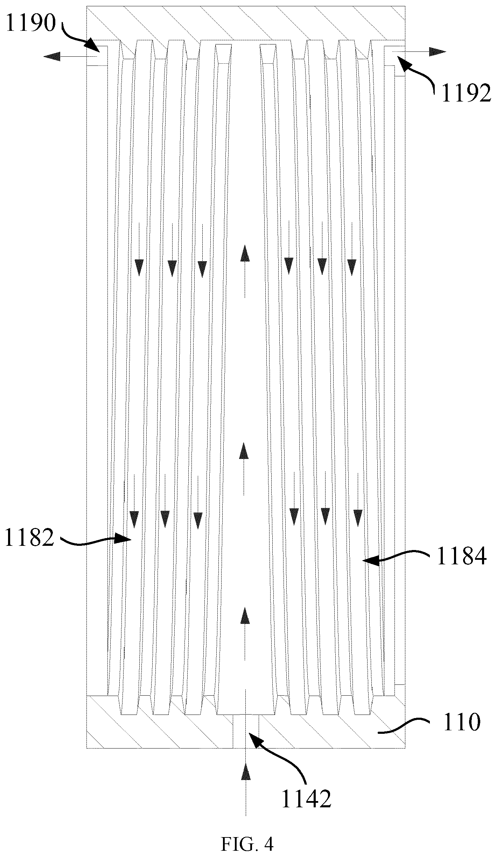

As illustrated in FIG. 4, the refrigerant entering the guide groove 118 through the first through hole 1142 passes through the first flow guide structure 1182 and the second flow guide structure 1184, and then is discharged out of the guide groove 118 from the first communication port 1190 and the second communication port 1192.

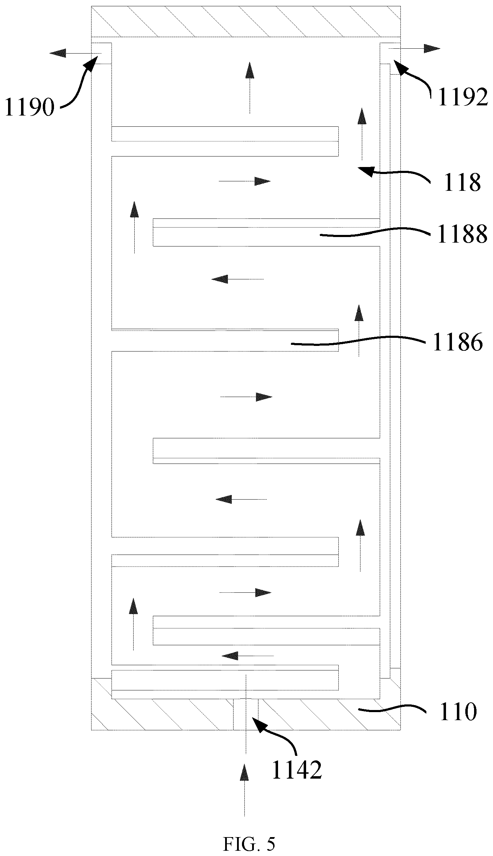

As illustrated in FIG. 5, the refrigerant entering the guide groove 118 the first through hole 1142 undergoes flow deflection due to blocking of the first blocking rib 1186 and the second blocking rib 1188, and then is discharged out of the guide groove 118 from the first communication port 1190 and the second communication port 1192.

As illustrated in FIG. 5, the refrigerant entering the guide groove 118 through the first through hole 1142 passes through the guide groove 118, and then is discharged out of the guide groove 118 from the first communication port 1190 and the second communication port 1192.

### Embodiment 16:

The compressor 100 according to the present disclosure includes a three-way refrigerant circuit that cools the stator structure 120, the rotor structure 130, the first bearing structure 140, and the second bearing structure 150, respectively.

Cooling of the stator structure 120: an annular guide groove 118 is formed by an outer side of the stator structure 120 and the inner side of the housing 110. After the refrigerant supplied from the guide groove 118 enters the annular guide groove 118, the stator structure 120 is cooled by the annular guide groove 118. Then, the refrigerant flows out of two sides of the communication port to cool the winding on the stator structure 120 and the end portion of the first bearing structure 140 and the end portion of the second bearing structure 150.

Cooling of the rotor structure 130: a fourth through hole 126 is formed on the stator structure 120. After the refrigerant enters the fourth through hole 126, a surface of the rotor structure 130 is cooled. Zero, one, or more fourth through hole(s) 126 may be provided based on actual heat generation.

In the cooling of the first bearing structure 140, refrigerant gas of a primary circuit of the compressor 100 enters the interior of the housing 110 from a rear side of the first impeller 164 by means of sealing of a rear end of the first impeller 164, passes through the first bearing structure 140, and cools the first bearing structure 140. At the same time, the part of the refrigerant in the guide groove 118 for cooling the stator structure 120 also participates in the cooling of the first bearing structure 140.

In the cooling of the second bearing structure 150, the refrigerant gas of the primary circuit of the compressor 100 enters the interior of the housing 110 from a rear side of the second impeller 174 by means of sealing of a rear end of the second impeller 174, passes through the second bearing structure 150, and cools the second bearing structure 150. At the same time, the part of the refrigerant in the guide groove 118 for cooling the stator structure 120 also participates in the cooling of the second bearing structure 150.

In this embodiment, the compressor 100 is a horizontal compressor 100. A communication port is formed in each of a left side and a right side of the guide groove 118. The communication port is located at a higher level than two thirds of a diameter of the annular flow channel.

The diversion trench 118 may be arranged in three ways: a spiral type, a flow-deflection type, and a straight-through type.

The fourth through hole 126 configured to cool the rotor structure 130 is formed on the stator structure 120. The fourth through hole 126 is located at a lower level than the communication port. Zero, one, or more fourth through hole(s) 126 may be provided based on different heat generation of the rotor structure 130.

The first impeller 164 and the second impeller 174 are disposed at the two sides of the compressor 100, respectively. The refrigerant enters the housing 110 by means of the sealing of the rear end of the first impeller 164 to cool the first bearing structure 140, and the refrigerant enter the housing 110 by means of the sealing of the rear end of the second impeller 174 to cool the second bearing structure 150 is cooled.

### Embodiment 17:

The present disclosure provides a refrigeration system. The refrigeration system includes the compressor 100 according to any one of the above-mentioned embodiments.

The refrigeration system according to the present disclosure includes the compressor 100 according to any one of the above-mentioned embodiments, and therefore has all beneficial effects of the compressor 100 according to any one of the above-mentioned embodiments, which are not enumerated herein.

### Embodiment 18:

On the basis of Embodiment 17, the refrigeration system further includes an evaporator and a condenser. The evaporator is connected to the first compression structure 160 of the compressor 100 and also connected to the second through hole 1144 of the compressor 100. The condenser is connected to the first through hole 1142 of the compressor 100 and also connected to the second compression structure 170 of the compressor 100.

In this embodiment, the refrigeration system further includes the evaporator and the condenser. Gaseous refrigerant discharged from the evaporator is compressed by the first compression structure 160 and the second compression structure 170 and leaks into the housing 110 to cool the compressor 100. At last, the refrigerant discharged from the second compression structure 170 enters the condenser.

Liquid refrigerant discharged from the condenser enters the housing 110 through the first through hole 1142. After the compressor 100 is cooled, the gaseous refrigerant is formed to enter the evaporator.

Further, in the refrigeration system, the compressor 100 is cooled simultaneously with heat exchange of the refrigeration system.

### Embodiment 19:

The present disclosure provides a refrigeration apparatus. The refrigeration apparatus includes: the compressor 100 according to any one of the above-mentioned embodiments; or the refrigeration system according to any one of the above-mentioned embodiments.

The refrigeration apparatus according to the present disclosure includes the compressor 100 according to any one of the above-mentioned embodiments or the refrigeration system according to any one of the above-mentioned embodiments, and therefore has all beneficial effects of the compressor 100 according to any one of the above-mentioned embodiments or the refrigeration system according to any one of the above-mentioned embodiments, which are not enumerated herein.

In this embodiment, the refrigeration apparatus may be an apparatus such as a refrigerator or an air conditioner.

In the present disclosure, terms "first", "second", and "third" are only used for descriptive purposes, and cannot be understood as indicating or implying relative importance; and "a plurality of' means two or more, unless specified otherwise. Terms "mounted," "connected," "coupled" and "fixed" are understood broadly, such as fixed, detachable mountings, connections and couplings or integrated, and can be mechanical or electrical mountings, connections and couplings, and also can be direct and through media indirect mountings, connections, and couplings, which can be understood by those skilled in the art according to the detail embodiment of the present disclosure.

In the description of the present disclosure, it is to be understood that, terms such as "over", "below", "left", "right", "front", "back", etc., is based on the orientation or position relationship shown in the drawings, and is only for the convenience of describing the present disclosure and simplifying the description, rather than indicating or implying that the associated device or element must have a specific orientation, or be constructed and operated in a specific orientation, and therefore cannot be understood as a limitation on the present disclosure.

In the description of this specification, descriptions with reference to the terms "an embodiment", "some embodiments", "specific examples", etc., mean that specific features, structure, materials or characteristics described in conjunction with the embodiment or example are included in at least one embodiment or example of the present disclosure. In this specification, the schematic representations of the above terms do not necessarily refer to the same embodiment or example. Moreover, the described specific features, structures, materials or characteristics may be combined in any one or more embodiments or examples in a suitable manner.

The embodiments described above are only preferred embodiments, and not intended to limit the present disclosure. For those skilled in the art, various changes and variations can be made to the present disclosure. Any modifications, equivalent substitutions, and improvements made within the spirit and principle of the present disclosure are to be encompassed by the scope of the claims of the present disclosure.

## Claims

1. A compressor, comprising: a housing comprising a first section, a middle section, and a second section which are from an end of the housing to another end of the housing, the middle section having a first through hole and a second through hole, and each of the first through hole and the second through hole being in communication with an interior of the housing and an outside of the housing; a stator structure mounted in the housing and located at the middle section; a rotor structure rotatably passing through the stator structure; a first bearing structure mounted in the first section; a second bearing structure mounted in the second section, the rotor being mounted at the first bearing structure and the second bearing structure; a first compression structure disposed at an end of the first section facing away from the middle section, an interior of the first compression structure being in communication with an interior of the middle section through the first bearing structure; and a second compression structure disposed at an end of the second section facing away from the middle section, an interior of the second compression structure being in communication with the interior of the middle section through the second bearing structure.

2. The compressor according to claim 1, wherein the stator structure comprises a body having a third through hole and a fourth through hole in communication with the third through hole, the third through hole being formed in an axial direction of the body, the rotor structure passing through the third through hole, and the fourth through hole being formed in a radial direction of the body.

3. The compressor according to claim 2, wherein the body has one fourth through hole, or a plurality of fourth through holes uniformly arranged at the body.

4. The compressor according to claim 2, wherein the fourth through hole is located at a middle of the body in the axial direction of the body.

5. The compressor according to any one of claims 1 to 4, wherein the middle section has a guide groove formed at an inner wall of the middle section.

6. The compressor according to claim 5, wherein the guide groove comprises: a first flow guide structure spirally disposed at the middle section and in communication with the first through hole; and a second flow guide structure spirally disposed at the middle section and in communication with the first through hole.

7. The compressor according to claim 5, further comprising: at least one first blocking rib connected to one of side walls of the guide groove; and at least one second blocking rib connected to another one of the side walls of the guide groove, the at least one first blocking rib and the at least one second blocking rib being alternatively arranged sequentially at the guide groove in a circumferential direction of the housing.

8. The compressor according to claim 5, wherein the guide groove has an annular structure and surrounds the inner wall of the middle section.

9. The compressor according to claim 5, wherein in an axial direction of the housing: the first through hole is located at a middle of the middle section and in communication with the guide groove; and the middle section has two second through holes respectively formed at two sides of the middle section and in communication with the guide groove.

10. The compressor according to claim 5, wherein: the compressor is a horizontal compressor; each of two side walls of the guide groove has a communication port located at a higher level than two thirds of an outer diameter of the guide groove; and a flow guide port is located at a lower level than one third of the outer diameter of the guide groove.

11. The compressor according to any one of claims 1 to 3, wherein: the first compression structure comprises a first compression chamber and a first channel, the first channel being configured to connect the first compression chamber to the interior of the housing; and the second compression structure comprises a second compression chamber and a second channel, the second channel being configured to connect the second compression chamber to the interior of the housing.

12. The compressor according to any one of claims 1 to 3, wherein: the first bearing structure is an electromagnetic bearing structure; and the second bearing structure is an electromagnetic bearing structure.

13. The compressor according to any one of claims 1 to 3, further comprising: a communication pipe configured to connect the first compression structure to the second compression structure.

14. A refrigeration system, comprising: the compressor according to any one of claims 1 to 13.

15. The refrigeration system according to claim 14, further comprising: an evaporator connected to the first compression structure of the compressor and the second through hole of the compressor; and a condenser connected to the first through hole of the compressor and the second compression structure of the compressor.

16. A refrigeration apparatus, comprising: the compressor according to any one of claims 1 to 13; or the refrigeration system according to claim 14 or 15.
